# EUROPEAN PATENT APPLICATION

(11) **EP 3 321 604 A1**
(43) Date of publication of application: **16.05.2018**
(21) Application number: 16198786.2
(22) Date of filing: 15.11.2016
(51) Int. Cl.: F25B 25/02, F25B 15/04

(54) **REFRIGERATION SYSTEM AND RELATED METHOD OF REVAMPING**

(71) Applicant: Casale SA, 6900 Lugano (CH)
(72) Inventor: PANZA, Sergio, 22100 Como (IT)
(74) Representative: Zardi, Marco

(57) **Abstract**

A refrigeration system comprising an absorption refrigeration unit (3) and a chiller (2) wherein: the chiller receives a liquid refrigerant (20) from the absorption unit and provides a refrigerant vapours (21) and a liquid blowdown (22); the absorption refrigerating unit (3) comprises an absorber (4) wherein said gaseous stream (21) is contacted with a solution (24) of said refrigerant into an absorbent; wherein the absorber (4) is positioned at a greater elevation **(*h1*)** than the chiller (2) and the system comprises means (13) downstream of the chiller (2) which pressurizes said liquid blowdown (22) and a flowline which directs the pressurized liquid blowdown to the absorber (4).

## Description

### Field of the invention

The invention relates to a refrigeration system comprising an absorption refrigeration unit which provides a liquid refrigerant to a chiller and a related method of revamping. In particular, the invention relates to a refrigeration system for the refrigeration of a process gas of an ammonia plant.

### Prior art

A refrigeration system of the type considered herein comprises an absorption refrigeration unit and a chiller. The absorption refrigeration unit provides the chiller with a liquid refrigerant, which is evaporated in the chiller producing the refrigerating effect and releasing a gaseous stream containing the refrigerant vapours.

Said absorption refrigeration unit essentially comprises: an absorber wherein the refrigerant vapours are absorbed by a lean solution of the refrigerant in a suitable solvent, producing a rich solution and releasing some heat; a desorber wherein the refrigerant vapours are extracted from said rich solution and the above mentioned lean solution is separated for further use in the absorber; an air cooler wherein the refrigerant vapours are condensed to provide the above mentioned liquid refrigerant which is then available for the evaporation process in the chiller.

The driving force of the process is the heat furnished to the desorber for separation of the refrigerant vapours from the rich solution. A low-temperature heat is discharged by the air cooler and the absorber. The heat released in the absorber is generally transferred to cooling water by indirect heat exchange.

The chiller and the absorber are operated at a first pressure; the desorber and the air cooler are operated at a second pressure, which is higher than the first pressure. Generally the first pressure is comprised between vacuum and 5 bar(gauge).

Said refrigeration systems are used, among others, for the refrigeration of a process gas in ammonia plants, in particular for the refrigeration of a make-up synthesis gas comprising H₂ and N₂ provided by the front-end section of an ammonia plant and for the refrigeration of an ammonia product gas.

Several absorbent-refrigerant pairs are known. The most common are water-ammonia and litium bromide-water.

The chiller outputs the refrigerant vapours and a liquid blowdown containing some liquid refrigerant. When a water-ammonia pair is used, said blowdown is liquid ammonia comprising about 4 to 8% of water.

In a typical layout, the chiller is substantially positioned at groud level and the absorber which receives the refrigerant vapours from the chiller is positioned at a certain elevation. The liquid blowdown of the chiller is sent to a vessel, which is located below the absorber and wherein the liquid blowdown mixes with the rich solution provided by the absorber forming the input stream to the desorber.

However, said configuration has some drawbacks.

First of all, sending the liquid blowdown to the vessel located below the absorber is not efficient from an energetic point of view, as the refrigerant capacity of the liquid blowdown is not exploited.

Another drawback is the possible accumulation of the liquid blowdown in the chiller. This entails an increase of the content of the absorbent (e.g. water) in the liquid refrigerant (e.g. ammonia) and an increase of the boiling temperature of the liquid refrigerant itself, which reduces the refrigeration power of the chiller.

A further drawback of the refrigeration systems of the prior art is the strong dependence from the ambient temperature which makes the absorption refrigeration system less effective under hot ambient temperature conditions (e.g. in summer).

In particular, the ambient temperature affects the condensation of the refrigerant vapours in the air cooler. A higher temperature of the cooling air results in a lower temperature difference (delta T) between the cooling air and the refrigerant and, consequently, a greater condensation pressure. The increase of the condensation pressure causes a corresponding increase of the pressure in the desorber; a higher pressure in the desorber makes available less regeneration heat, therefore less refrigerant is extracted and less refrigeration power is available. Moreover, due to uncomplete extraction of the refrigerant in the desorber, the lean solution separated from the desorber contains non negligible amounts of refrigerant, being therefore less efficient in the absorption process.

As stated above said refrigeration systems are commonly used in ammonia plants. Several ammonia plants have been subjected to revamping in order to have an increased capacity, e.g. from 20 to 50%. In these conditions, said refrigeration systems represent a bottleneck of such plants. In view of this, the need of increasing the capacity of said refrigeration systems at relatively low costs is strongly felt.

### Summary of the invention

The aim of the invention is to solve the above shortcomings of the prior art.

This aim is reached with a refrigeration system according to claim 1.

Said refrigeration system comprises at least one absorption refrigeration unit and a chiller, wherein:
said at least one absorption refrigeration unit provides a liquid refrigerant to said chiller;
said chiller evaporates said liquid refrigerant to provide a refrigeration effect, said chiller releasing a liquid blowdown and a gaseous stream containing the evaporated refrigerant;
said at least one absorption refrigeration unit comprises an absorber, wherein said gaseous stream is contacted with a solution of said refrigerant into an absorbent, obtaining absorption of evaporated refrigerant into said solution and resulting in an enriched solution containing a greater amount of the refrigerant;
the absorber is positioned at a greater elevation than the chiller;
the refrigeration system being characterized by comprising means arranged downstream of the chiller which pressurizes said liquid blowdown, and a flowline which directs the pressurized liquid blowdown to the absorber.

Said solution of refrigerant into an absorbent, which contacts said gaseous stream inside the absorber, is also referred to as lean solution. In the case of water-ammonia as the absorbent-refrigerant pair, said lean solution is a dilute solution of ammonia into water, while said rich solution is a more concentrated solution of ammonia into water.

Still in the case of water-ammonia pair, the "liquid blowdown" is normally an ammonia solution containing up to 10% of water, preferably 4-8% of water, more preferably 6-8% of water.

Said absorption refrigeration unit also comprises: a desorber, wherein said enriched solution from the absorber is heated causing the refrigerant to evaporate providing a gaseous stream containing the evaporated refrigerant and a lean solution, and a condenser, wherein at least part of said gaseous stream from the desorber is condensed providing the liquid refrigerant.

According to different embodiments, the means used to pressurize the liquid blowdown of the chiller is a pump or an autoclave.

In case an autoclave is used as pressurizing means, according to a preferred embodiment, the liquid blowdown is collected inside the autoclave until a setup level of liquid is reached and, once said setup level is reached, the autoclave is supplied with a driving fluid under pressure which pushes the liquid blowdown from the autoclave to the absorber.

Preferably, said driving fluid comprises a portion of the gaseous stream containing the evaporated refrigerant provided by the desorber. The desorber is operated at a greater pressure than the chiller and the absorber, which are operated substantially at the same pressure. Accordingly, the gaseous stream containing the evaporated refrigerant is preferably split into a first portion and a second portion; the first portion is sent to the condenser and the second portion is used as driving fluid in the autoclave, wherein it mixes with the liquid blowdown and the resulting stream feeds the absorber.

The use of such means of pressurization allows to return the liquid blowdown to the absorber, which takes advantage of the refrigerant capacity of the blowdown to absorb the refrigerant vapours, thus increasing the energy recovery.

The condenser supplying said liquid refrigerant is preferably an evaporative condenser. Advantageously, said evaporative condenser comprises a condensing tube or coil inside which the refrigerant to be condensed circulates. An amount of water is sprayed over the condensing tube and an air flow is pulled over the tube, causing at least a portion of the sprayed water to evaporate and remove heat from the tube and the refrigerant inside.

The use of an evaporative condenser in said absorption refrigeration system has several advantages if compared with the prior art use of an air cooler. A first advantage is a decrease in the condensing temperature and a consequent decrease in the condensation pressure. This implies a decrease in the desorption pressure (being the same as the condensation pressure), hence more regeneration heat is available, more refrigerant is extracted and more liquid refrigerant is available to restart the refrigeration cycle. Ultimately, an absorption refrigeration system as revamped according to the invention is much more efficient and less sensitive to the ambient temperature.

According to a particular embodiment of the invention, the refrigeration system comprises a first absorption refrigeration unit and a second absorption refrigeration unit, wherein:
the liquid refrigerant provided by the first absorption refrigeration unit and the liquid refrigerant provided by the second absorption refrigeration unit are fed to the chiller;
the gaseous stream effluent from the chiller and containing evaporated refrigerant splits into two flow lines, a first line being directed to the absorber of the first absorption refrigeration unit and a second line being directed to the absorber of the second absorption refrigeration unit;
the liquid blowdown from the chiller splits into two flow lines, a first line being directed to the absorber of the first absorption refrigeration unit and a second line being directed to the absorber of the second absorption refrigeration unit.

Preferably, the liquid refrigerant from the first absorption refrigeration unit mixes with the liquid refrigerant from the second absorption refrigeration unit, forming the input stream to the chiller.

According to preferred embodiments, said second absorption refrigeration unit operates at absorption and desorption pressures which are lower than the absorption and desorption pressures, respectively, of the first absorption refrigeration unit.

Preferably, said refrigeration system comprises control means suitable to regulate the flowrates of the liquid blowdown and of the gaseous stream provided by the chiller and directed to the absorber of the second absorption refrigeration unit. The presence of such control means allows the second absorption refrigeration unit to operate at said lower pressures.

Preferably, said refrigeration system also comprises control means which regulates the flowrate of the liquid refrigerant provided by said second absorption refrigeration unit.

In preferred embodiments, the above described system with two absorption refrigeration units is obtained by revamping a refrigeration system by installation of a further unit, according to the annexed claims. The provision of said further absorption refrigeration unit allows to increase the capacity of the existing refrigeration system, which is particularly desired when said refrigeration system is installed in ammonia plants which have been revamped in order to increase their capacities, as mentioned above.

According to another embodiment of the invention, the refrigeration system comprises one absorption refrigeration unit and one compression refrigerator providing a liquid refrigerant and comprising a compressor, wherein:
the liquid refrigerant provided by the absorption refrigeration unit and the liquid refrigerant provided by the compression refrigerator are fed to the chiller;
the gaseous stream effluent from the chiller and containing evaporated refrigerant splits into two flow lines, a first line being directed to the absorber of the absorption refrigeration unit and a second line being directed to the compressor of the compression refrigerator;
the liquid blowdown from the chiller is directed to the absorber of the absorption refrigeration unit.

Preferably, the liquid refrigerant from the absorption refrigeration unit mixes with the liquid refrigerant from the compression refrigerator, forming the input stream to the chiller.

Said compression refrigerator essentially comprises: said compressor receiving a gaseous refrigerant; a condenser providing a liquid refrigerant; an expander providing a low pressure liquid refrigerant; an evaporator wherein said low pressure liquid refrigerant is evaporated to provide said gaseous refrigerant.

Similarly, said system with one absorption refrigeration unit and one compression refrigerator is preferably obtained by revamping a refrigeration system comprising an absorption refrigeration unit by installation of a compression refrigerator according to the annexed claim, in order to increase the capacity of the refrigeration system.

Another object of the present invention is a method of revamping according to the claims.

According to some embodiments, said method of revamping comprises the installation of a further absorption refrigeration unit and is characterized by:
feeding the liquid refrigerant provided by the newly installed absorption refrigeration unit and the liquid refrigerant provided by the existing absorption refrigeration unit to the chiller;
splitting of the gaseous stream effluent from the chiller into two flow lines, a first line being directed to the absorber of the existing absorption refrigeration unit and a second line being directed to the absorber of the newly installed absorption refrigeration unit;
splitting of the liquid blowdown provided by the chiller into two flow lines, a first line being directed to the absorber of the existing absorption refrigeration unit and a second line being directed to the absorber of the newly installed absorption refrigeration unit.

In view of the above, the chiller receives the liquid refrigerant both by the existing absorption refrigeration unit and the newly installed one. The new absorption refrigeration unit is able to provide the same refrigerant effect as the existing unit, but at lower absorption and desorption pressures. Hence, an object of the invention is to operate the two absorption units at different absorption and desorption pressures and to prevent the new absorption refrigeration unit from operating at the same elevated pressures as the existing unit, which would make available less refrigeration power to the chiller.

To this purpose and according to a preferred embodiment, the method of revamping of the invention comprises the installation of control means suitable to regulate the flows of the liquid blowdown and the gaseous stream provided by the chiller and directed to the newly installed absorption refrigeration unit. Accordingly, said control means are arranged to operate said newly installed absorption refrigeration unit at said lower absorption and desorption pressures.

Preferably, said method of revamping also comprises the installation of further control means suitable to regulate the flow of the liquid refrigerant provided by the newly installed absorption refrigeration unit. A new set point can be advantageously ricalculated for said further control means considering the flowrates of the gaseous stream and the liquid blowdown provided by the chiller and returned to the absorber of the new absorption refrigeration unit.

Preferably, said method of revamping comprises the installation of analysers of the refrigerant and absorbent concentrations in said input / output flows to / from the new absorption refrigeration unit. Said analyzers are preferably connected to said control means to obtain an automatic control system.

The invention can be implemented with various commercially available refrigerant-absorbent pairs. As stated above, a preferred embodiment uses ammonia as refrigerant and water as absorbent (or solvent) and is favourable for refrigerant temperatures below 0 °C.

The refrigeration system of the invention is particularly attractive when used to refrigerate a make-up gas or a product gas from an ammonia plant.

The advantages will emerge even more clearly with the aid of the detailed description below relating to a preferred embodiment.

### Description of the figures

Fig. 1 is a scheme of a refrigeration system of the prior art.
Fig. 2 is a scheme of a refrigeration system according to an embodiment of the invention.
Fig. 3 is a block scheme of a refrigeration system according to another embodiment of the invention.

### Detailed description

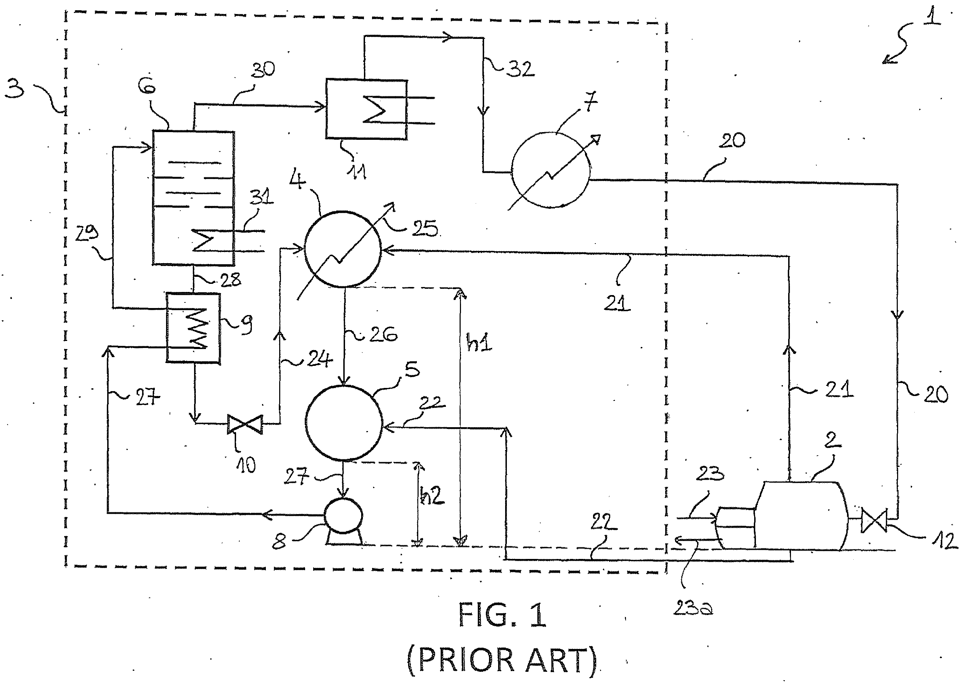

The refrigeration system 1 of Fig. 1 comprises a chiller 2 and an absorption refrigeration unit 3.

Said chiller 2 is supplied with liquid ammonia 20 from the absorption refrigeration unit 3, which evaporates in the chiller 2 providing ammonia vapours 21 and a liquid blowdown 22. The evaporation of said ammonia 20 refrigerates a current 23 resulting in a refrigerated current 23a. Said current 23 is for example a process gas of an ammonia plant.

Said absorption refrigeration unit 3 essentially comprises: an absorber 4, a vessel 5, a desorber 6 and an air cooler 7 and uses water-ammonia as the absorbent-refrigerant pair.

According to the example of the figure, the chiller 2 is installed at ground level, said absorber 4 is located at an elevation ***h1*** with respect to the chiller 2 and said vessel 5 is located at an elevation ***h2*** with respect to the chiller 2. The elevation ***h2*** is smaller than ***h1*.**

The ammonia vapours 21 are absorbed by a lean ammonia solution 24 in the absorber 4 transferring heat to a cooling water 25 and providing a rich ammonia solution 26.

Said rich solution 26 is sent to the vessel 5. Said vessel 5 is also fed with the liquid blowdown 22 of the chiller, which mixes with the rich solution 26 to provide an output mixture 27.

Said mixture 27 is sent to the desorber 6 via a pump 8 and a heat exchanger 9 wherein said solution 27 is pre-heated by the lean solution effluent 28 of said desorber 6, resulting in a stream 29. The heat recovery within said heat exchanger 9 is advantageous because it reduces the heat input to said desorber 6 and reduces the quantity of heat to be removed inside the absorber 4.

The lean solution of ammonia 28 is returned to the absorber 4 via said heat exchanger 9. After cooling in the exchanger 9, said lean solution is expanded in a valve 10 to the pressure of the absorber 4, forming the above mentioned lean ammonia solution 24. The heat input to said desorber 6 is provided by a heating medium 31 (for example steam).

The high-pressure pre-heated solution 29 enters the desorber 6, wherein ammonia vapours 30 are extracted and cooled in a heat exchanger 11 to provide vapours 32. Said vapours 32 are then sent to the air cooler 7 which provides the liquid ammonia 20.

The so obtained liquid ammonia 20 passes through an expansion valve 12 which lowers the pressure of the ammonia 20 from the pressure of the condenser 7 to the lower pressure of the chiller 2. The ammonia 20 then evaporates again inside the chiller 2, as above described.

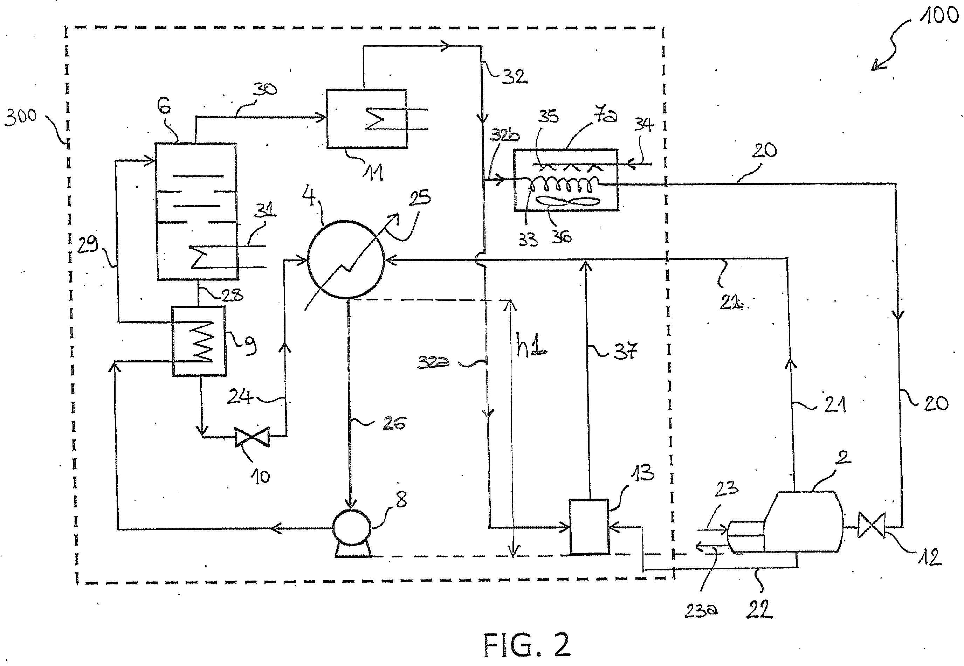

Fig. 2 shows a refrigeration system 100 according to an embodiment of the invention, comprising the chiller 2 and an absorption refrigeration unit 300. The same components of the prior art system shown in Fig. 1 are denoted with the same reference number.

According to this embodiment, the liquid blowdown 22 is fed to an autoclave 13, which also receives a portion 32a of the ammonia vapours 32 as driving fluid. The desorber 6 operates at a higher pressure than the absorber 4, providing ammonia vapours 32 under pressure.

Said portion 32a of the pressurized ammonia vapours mixes with the liquid blowdown 22 inside said autoclave 13 to provide an aqua/ammonia two phase flow stream 37. The pressure of said portion 32a provides the two phase flow stream 37 with the energy necessary to overcome the elevation ***h1*** and to feed said stream 37 to the absorber 4.

According to the example of the figure, said aqua/ammonia two phase flow stream 37 is mixed with the ammonia vapours 21 and returned to the absorber 4, which provides a rich ammonia solution 26. Said ammonia solution 26 is then sent to the desorber 6 via the pump 8 and the heat exchanger 9.

Referring to Fig. 2, the vapours 32 leaving the heat exchanger 11 split into two portions 32a and 32b. The first portion 32a is used as driving fluid in the autoclave 13 and the second portion 32b is supplied to an evaporative condenser 7a.

Said evaporative condenser 7a comprises a condensing coil 33 receiving the ammonia vapours 32b. An amount of water 34 is sprayed over the condensing coil 30 via suitable sprayers 35 and an air flow is pulled over the coil 30 by means of a fan 36, causing a portion of the sprayed water 34 to evaporate. The evaporation of water refrigerates the coil 33 promoting the condensation of the vapours 32b into liquid ammonia 20.

The layout of the refrigerating system of Fig. 2 can be obtained by revamping the existing refrigerating system of Fig. 1 by means of the following operations:
installation of an autoclave 13 downstream of the chiller 2, which receives the liquid blowdown 22;
discontinuing the line 22 from the chiller 2 to the vessel 5 and removing said vessel 5;
installation of a line 32a for feeding a portion of the pressurized ammonia vapours 32 provided by the desorber 6 to said autoclave 13, wherein it mixes with the liquid blowdown 22 to provide an aqua/ammonia two phase flow stream;
installation of a line 37 for extracting said aqua/ammonia two phase flow streamfrom the autoclave 13 and returning it to the absorber 4;
replacing the air cooler 7 with an evaporative condenser 7a.

According to another embodiment, said vessel is not physically removed and acts as a storage tank of the rich ammonia solution 26 provided by the absorber, before it is introduced into the desorber 6.

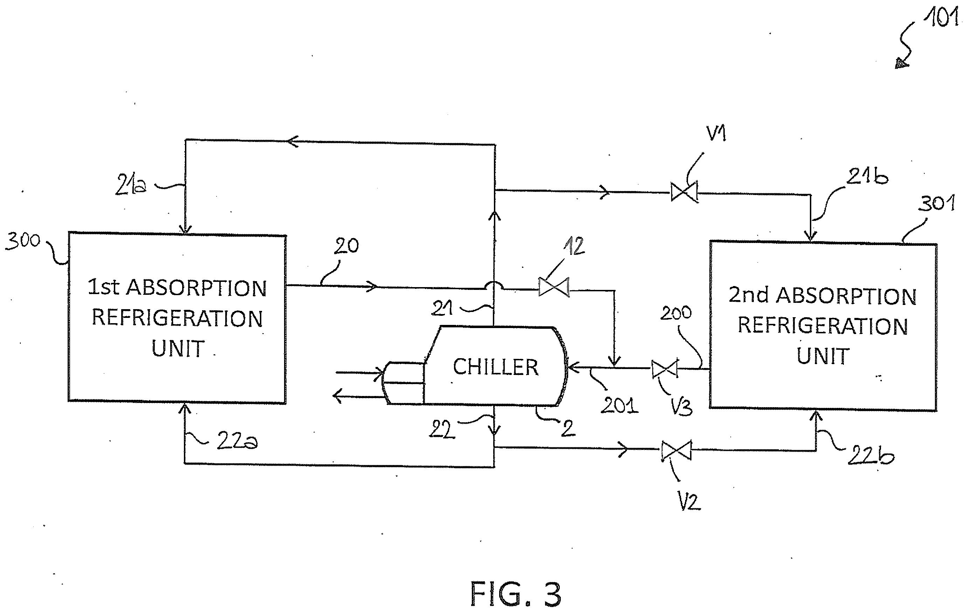

Fig. 3 shows a block scheme of a refrigeration system 101 according to another embodiment of the invention.

This refrigeration system 101 comprises a first absorption refrigeration unit 300 and a second absorption refrigeration unit 301 of the type represented in Fig. 2, and the chiller 2. Said second unit 301 operates at a lower pressure than said first unit 300 and both said units 300, 301 interface with the chiller 2.

Said first unit 300 provides the liquid refrigerant 20 and said second unit 301 provides a liquid refrigerant 200.

According to this embodiment, the liquid refrigerant 20 provided by the first absorption refrigeration unit 300 is mixed with the liquid refrigerant 200 provided by the second absorption refrigeration unit 301, forming the input stream 201 to the chiller 2; the gaseous stream 21 provided by the chiller 2 is split into two flow lines, a first line 21 a being directed to the absorber of the first absorption refrigeration unit 300 and a second line 21 b being directed to the absorber of the second absorption refrigeration unit 301; the liquid blowdown 22 provided by the chiller 2 is split into two flow lines, a first line 22a being directed to the absorber of the first absorption refrigeration unit 300 and a second line 22b being directed to the absorber of the second absorption refrigeration unit 301.

Said refrigeration system 101 also comprises flow control means of the input streams 21 b and 22b to said second unit 301 and of the output stream 200 from the same unit 301. The presence of such flow control systems allows to operate the two absorption refrigeration units 300, 301 at different pressures, in particular to operate the second unit 301 at a lower pressure, thus avoiding any enriching or depletion of ammonia in the second unit 301.

More in detail, said refrigeration system 101 comprises:
first control means on the second line 21 b of the ammonia vapours directed to the second unit 301, which comprises a valve V1 and a flow meter (not shown), said valve V1 regulating the flow of said ammonia vapours responding to a signal generated by said flow meter;
second control means on the second line 22b of the liquid blowdown directed to the second unit 301, said control system comprising a valve V2 and a flow meter (not shown), said valve V2 regulating the flow of said liquid blowdown responding to a signal generated by said flow meter;
third control means, comprising a valve V3 and a flow meter (not shown) to regulate the flow of the liquid ammonia 200 provided by the second unit 301;
the exapansive valve 12 which lowers the pressure of the liquid ammonia 20 provided by the first unit 301 to the pressure of the chiller 2; according to the example of the figure the liquid ammonia 20 passes through the valve 12 before mixing with the liquid refrigerant 200 provided by the first unit 300.

The layout of the refrigeration system of Fig. 3 advantageously results from the revamping of the existing refrigeration system of Fig. 1.

## Claims

1. A refrigeration system (100) comprising at least one absorption refrigeration unit (300) and a chiller (2), wherein:
said at least one absorption refrigeration unit (300) provides a liquid refrigerant (20) to said chiller (2);
said chiller (2) evaporates said liquid refrigerant (20) to provide a refrigeration effect, said chiller (2) releasing a liquid blowdown (22) and a gaseous stream (21) containing the evaporated refrigerant;
said at least one absorption refrigeration unit (300) comprises an absorber (4) wherein said gaseous stream (21) is contacted with a solution (24) of said refrigerant into an absorbent, obtaining absorption of evaporated refrigerant into said solution and resulting in an enriched solution (26) containing a greater amount of the refrigerant;
the absorber (4) is positioned at a greater elevation (***h1***) than the chiller (2);
the system being **characterized by** comprising means (13) arranged downstream of the chiller (2) which pressurizes said liquid blowdown (22), and a flowline which directs the pressurized liquid blowdown to said absorber (4).

2. A system according to claim 1, the means (13) pressurizing the liquid blowdown comprising a pump.

3. A system according to claim 1, the means (13) pressurizing the liquid blowdown comprising an autoclave.

4. A system according to claim 3, wherein the liquid blowdown (22) is collected inside said autoclave until a setup liquid level is reached and, once said setup level is reached, the autoclave (13) is supplied with a driving fluid under pressure which pushes the liquid blowdown from the autoclave (13) to the absorber (4).

5. A system according to claim 4, wherein said absorption refrigeration unit (300) comprises a desorber (6) where said enriched solution (26) from the absorber (4) is heated causing the refrigerant to evaporate providing a gaseous stream (32) containing the evaporated refrigerant and a lean solution, and wherein said driving fluid under pressure of said autoclave comprises a portion (32a) of said gaseous stream containing the evaporated refrigerant provided by said desorber (6).

6. A system according to claim 5, said absorption unit (300) comprising an evaporative condenser (7a) where a further portion (32b) of said gaseous stream (32) from the desorber (6) is condensed providing the liquid refrigerant (20), wherein said evaporative condenser includes a condensing tube or coil (33), the internal surface of said tube being contacted by said gaseous stream and the external surface of said tube being sprayed with water (34) and invested by an air flow.

7. A system according to any of the previous claims, comprising a first absorption refrigeration unit (300) and a second absorption refrigeration unit (301), wherein:
the liquid refrigerant (20) provided by the first absorption refrigeration unit (300) and the liquid refrigerant (200) provided by the second absorption refrigeration unit (301) are fed to the chiller (2);
the gaseous stream (21) effluent from the chiller (2) and containing evaporated refrigerant splits into two flow lines, a first line (21 a) being directed to the absorber of the first absorption refrigeration unit (300) and a second line (21 b) being directed to the absorber of the second absorption refrigeration unit (301);
the liquid blowdown (22) from the chiller (2) splits into two flow lines, a first line (22a) being directed to the absorber of the first absorption refrigeration unit (300) and a second line (22b) being directed to the absorber of the second absorption refrigeration unit (301).

8. A system according to any of claims 1 to 6, comprising one absorption refrigeration unit (300) and one compression refrigerator, said compression refrigerator providing a liquid refrigerant and comprising a compressor, wherein:
the liquid refrigerant (20) provided by the absorption refrigeration unit (300) and the liquid refrigerant provided by the compression refrigerator are fed to the chiller (2);
the gaseous stream (21) effluent from the chiller (2) and containing evaporated refrigerant splits into two flow lines, a first line being directed to the absorber of the absorption refrigeration unit and a second line being directed to the compressor of the compression refrigerator;
the liquid blowdown (22) from the chiller (2) is directed to the absorber of the absorption refrigeration unit (300).

9. A method for revamping a refrigeration system comprising an absorption refrigeration unit (3) and a chiller (2), wherein:
said absorption refrigeration unit (3) provides a liquid refrigerant (20) to said chiller (2);
said chiller (2) evaporates said liquid refrigerant (20) to provide a refrigeration effect, said chiller (2) releasing a liquid blowdown (22) and a gaseous stream (21) containing the evaporated refrigerant;
said absorption refrigerating unit comprises an absorber (4) wherein said gaseous stream (21) is contacted with a solution (24) of said refrigerant into an adsorbent, obtaining absorption of evaporated refrigerant into said solution and resulting in an enriched solution (26) containing a greater amount of the refrigerant;
the liquid blowdown (22) from the chiller is sent to a vessel (5);
the absorber (4) is positioned at a greater elevation (***h1***) than the chiller (2) and the vessel is positioned at a smaller elevation (***h2***) than said absorber;
the method of revamping being **characterized by**:
installing means (13) downstream of the chiller (2) to pressurize said liquid blowdown (22) to a pressure suitable to feed said blowdown to the absorber (4),
wherein said means (13) to pressurize said liquid blowdown preferably comprise a pump or an autoclave,
and discontinuing the liquid blowdown flow from the chiller (2) to said vessel (5).

10. A method according to claim 9, wherein said means (13) comprise an autoclave, wherein said absorption unit comprises a desorber (6) where said enriched solution (26) from the absorber (4) is heated causing the refrigerant to evaporate providing a gaseous stream (32) containing the evaporated refrigerant and a lean solution, and wherein the liquid blowdown (22) is collected inside said autoclave until a setup liquid level is reached and, once said setup level is reached, the autoclave (13) is supplied with a driving fluid under pressure which pushes the liquid blowdown from the autoclave (13) to the absorber (4), said driving fluid comprising a portion (32a) of said gaseous stream containing the evaporated refrigerant provided by the desorber (6).

11. A method according to claim 9 or 10, the absorption refrigeration unit comprising an air cooler (7) where the gaseous stream (30) from the desorber (6) is condensed providing the liquid refrigerant (20), the method being **characterized by** replacing said air cooler (7) with an evaporative condenser (7a).

12. A method according to any of claims 9 to 11, **characterized by**:
installing a further absorption refrigeration unit (301) providing a liquid refrigerant (200) and comprising an absorber;
feeding the liquid refrigerant (200) provided by the newly installed absorption refrigeration unit (301) and the liquid refrigerant (20) provided by the existing absorption refrigeration unit (300) to the chiller (2);
splitting the gaseous stream (21) effluent from the chiller (2) and containing evaporated refrigerant into two flow lines, a first line (21a) being directed to the absorber (4) of the existing absorption refrigeration unit (300) and a second line (21 b) being directed to the absorber of the newly installed absorption refrigeration unit (301);
splitting the liquid blowdown (22) from the chiller (2) into two flow lines, a first line (22a) being directed to the absorber (4) of the existing absorption refrigeration unit (300) and a second line (22b) being directed to the absorber of the newly installed absorption refrigeration unit (301).

13. A method according to claim 12, wherein the newly installed absorption refrigeration unit (301) operates at pressures of absorption and desorption which are lower than the pressures of absorption and desorption, respectively, of the existing absorption refrigeration unit (300); said method being **characterized by** installing control means to regulate the flows of the liquid blowdown (22b) and of the gaseous stream (21 b) provided by the chiller and directed to the newly installed absorption refrigeration unit (301); said control means being arranged to operate said newly installed absorption refrigeration unit (301) at said lower absorption and desorption pressures.

14. A method according to claim 13, **characterized by** installing control means to regulate the flow of the liquid refrigerant (200) provided by the newly installed absorption refrigeration unit (301).

15. A method according to any of claims 9 to 11, **characterized by**:
installing a compression refrigerator providing a liquid refrigerant and comprising a compressor;
feeding the liquid refrigerant (200) provided by the absorption refrigeration unit (300) and the liquid refrigerant provided by the newly installed compression refrigerator to the chiller (2);
splitting the gaseous stream (21) effluent of the chiller (2) and containing evaporated refrigerant into two flow lines, a first line being directed to the compressor of the compression refrigerator and a second line being directed to the absorber of the absorption refrigeration unit (301);
sending the liquid blowdown (22) provided by the chiller (2) to the absorber of the absorption refrigeration unit (301).
